# EUROPEAN PATENT SPECIFICATION

(11) **EP 0 789 156 B1**
(45) Date of publication and mention of the grant of the patent: **06.06.2001**
(21) Application number: 97300773.5
(22) Date of filing: 06.02.1997
(51) Int. Cl.: F16D 66/02

(54) **Brake condition monitoring means**
Mittel zur Erfassung des Zustandes einer Bremse
Moyens de surveillance d'état d'un frein

(30) Priority: 07.02.1996 GB 9602438
(43) Date of publication of application: 13.08.1997
(73) Proprietor: Meritor Automotive, Inc., Troy, Michigan 48084 (US)
(72) Inventor: Ward, Andrew John, Billesley, Birmingham B13 OPT (GB); Bissell, Martin, Sheldon, Birmingham B26 3LB (GB)
(74) Representative: Spall, Christopher John

(56) References cited:
- EP-A- 0 460 376
- EP-A- 0 567 155

## Description

This invention relates to brake condition monitoring means particularly for use with vehicle brakes of the kind in which a friction lining has an operative face adapted to be applied to a rotatable braking member, such as a drum or disc. In particular the present invention relates to a sensor arrangement for the measurement of brake lining wear and brake actuation stroke in a single assembly.

Brake lining wear is the reduction in thickness of lining material which progressively wears due to the gradual abrasion of the material due to contact with the brake rotor. A brake clearance adjuster, usually automatic, is arranged to "take up" the excessive clearance between the lining and the rotor so that the distance travelled by the brake actuator, or stroke, in order to apply the brake, is maintained substantially at a suitable minimum value to achieve efficient brake application.

In modern braking systems for vehicles it is advantageous to have knowledge of the condition or thickness of the lining. This helps the manufacturers of motor vehicles to plan service requirements and is also a valuable input for the detection of brake faults and the diagnosis of brake condition. In addition to the brake wear it is also advantageous to have knowledge of the actual actuator stroke since an excessive actuator stroke could indicate that the brake requires adjustment or that the automatic adjuster, itself, is malfunctioning. Each application of the brakes could also be monitored as well as the overall condition. Additionally, the rate at which brakes are applied, either relatively to each other or relative to a prescribed threshold for a range of applied pressures, is also an indication of the general brake condition as a brake that has excess friction or a tendency to seize, will obviously take longer to be applied to a desired level and uneven braking may occur.

It is already known to measure brake lining wear and brake actuation stroke in a single assembly. For example, in EP-A-0 567 155 a potentiometer is attached to a part of the brake that both moves upon actuation of the brake and is also displaced with increasing wear. Therefore as the stroke and wear occur a wiper arm within the potentiometer moves in a common direction. This has a major advantage that frequent small oscillatory movements that wear the resistive track are in the same general direction as the incremental wear movements seen upon brake adjustment. However as the oscillatory motion occurs, debris from the resistive track is generated in front of the wiper arm. Thus as the incremental motion takes place, the wiper arm has to push past the accumulated debris. It has been found that, during the adjustment phase or incremental motion, the debris tends to lift the wiper arm from the resistive track thus producing a fault or open circuit in the electrical circuit of the potentiometer.

We are aware of EP-A-0460376 which forms the pre-characterising portion of claim 1.

According to our invention in a brake condition monitoring means according to the pre-characterising portion of claim 1, the displacement sensor comprises an electrically resistive track, and a wiper arm movable with respect to the track in response to wear of the lining and increased stroke of the actuator, the wiper arm is rotatably driven from the adjuster as the effective length of the adjuster increases to compensate for wear of the friction lining, and rotary movement is applied to a part of a potentiometer for moving it angularly in the opposite direction in response to displacement of the brake in a brake-applying direction, whereby in use, as the brake is applied, a rotary movement is applied to the potentiometer in such a direction that relative movement of the wiper arm takes place in a second direction relatively opposite to the movement of the wiper arm in a first direction in response to lining wear.

Since the oscillatory stroke movement which generates the majority of track wear is in the first direction, any generated debris is always moved away from the second opposite direction in which the element moves in response to increasing stroke of the actuating means. We therefore avoid the situation where the element has to move through accumulated debris on adjustment due to normal brake lining wear.

Our brake condition monitoring means is substantially more tolerant than any arrangements known hitherto.

Transmission means between the brake and the potentiometer may include a lost-motion connection so constructed and arranged that the rotary movement is applied to the potentiometer only after brake clearances have been taken up. Thus the wiper arm is moved in the second direction only in response to deflection of components of the brake after the brake clearances have been taken up.

As lining wear increases resistive track of the potentiometer is shortened so that the output voltage of the sensor, when connected in a suitable electrical circuit, increases. As the linings progressively wear the wiper arm moves progressively in one direction. As each brake stroke occurs the wiper arm first moves a short distance in the opposite direction and then returns to the original position as the brakes are released.

The voltage step change as the adjuster increments to the next base value can be sensed and stored in an electronic controller. Therefore if the previous voltage reference for the previous adjuster position is also stored, and then subtracted from the current adjuster position voltage, with brakes off, then the voltage change by adjustment cycle can be checked. This corresponds to a measurement of the adjuster movement and this provides a method of checking that the adjuster is moving to take up any excess clearance when required to. Also if the voltage change when the brakes are actuated causes the voltage to drop below the original or previous installed value, this is a signal that clearance in the brake is in excess of that which the adjuster should have operated to take up excess. This therefore provides an indication that the adjuster itself malfunctioning.

The potentiometer may be of linear construction arranged in the brake with its axis spaced from parallel to that of the adjuster, or at any convenient attitude. Alternatively the sensor may comprise a rotary potentiometer.

When the potentiometer is of linear construction the wiper arm may be driven from the adjuster to compensate for wear of the friction linings and rotary movement may be applied to the housing of the potentiometer to move it angularly in response to angular movement of another part of the adjuster mechanism which normally rotates with the actuator stroke.

In a modification the rotary movement may be applied to the housing in response to axial movement of the caliper of the brake with respect to guide means. Suitably this movement can be transmitted through a rack and pinion mechanism and bevel gearing.

When the potentiometer is of rotary configuration, an electrical track is adjusted to rotate with actuator stroke, and a wiper member rotates with respect to the track upon rotation of the adjuster assembly to compensate for wear of the friction linings.

In another construction the displacement sensor comprises a sensor of the inductive type in which a sensor body containing active coils is arranged to be displaced by the "on" and "off" stroke of the brake.

Conveniently a rotary input causes an axial or linear displacement of the coils with respect to an armature which is in proportion to the stroke of the brake through the use of a transmission mechanism between the sensor body and a fixed plug.

The transmission mechanism may comprise a screw-threaded engagement.

Some embodiments of our invention are illustrated in the accompanying drawings in which: -
**Figure 1** illustrates a vehicle disc brake;
**Figure 2** is a portion of the brake of Figure 1 on an enlarged scale but illustrating one embodiment of brake sensor;
**Figure 3** is a modified construction including a rotary potentiometer;
**Figure 4** is a section through the rotary potentiometer;
**Figure 5** is a plan of the link arm of Figure 3;
**Figure 6** shows a modification in which the actuator stroke is applied to the potentiometer from the axial movement of the brake itself;
**Figure 7** is a perspective view showing the transmission mechanism incorporated in Figure 6; and
**Figure 8** is a portion of the brake of Figure 1 in an enlarged scale and illustrating another embodiment of brake sensor.

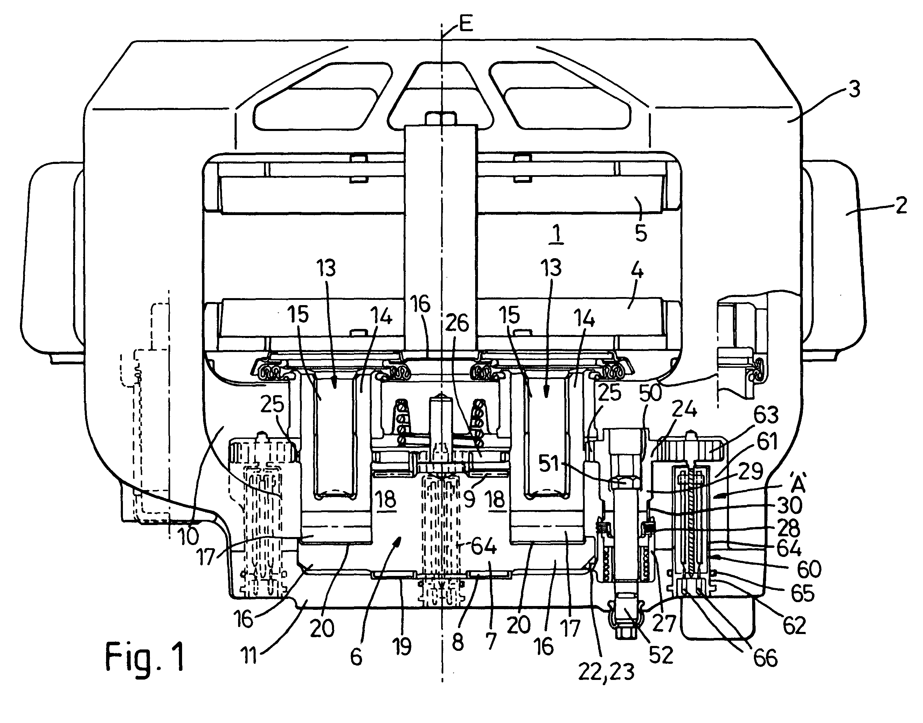

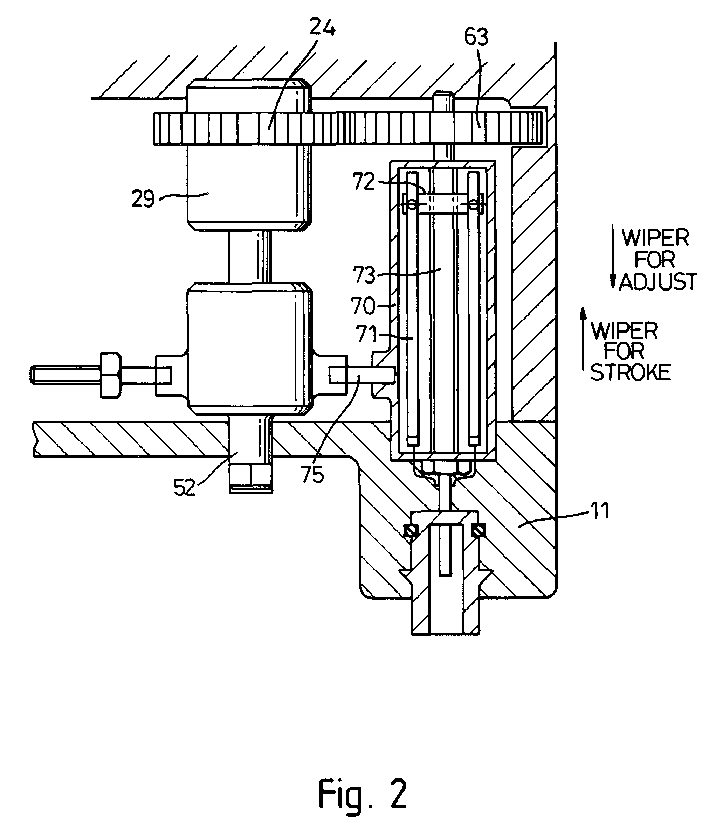

In the disc brake illustrated in Figure 1 and 2 of the accompanying drawings the brake comprises a brake disc 1 and a brake carrier 2. A floating caliper 3 straddles the carrier member 2 and co-operates with two brake pad assemblies 4 and 5, each comprising a rigid backing plate guided to slide between circumferentially spaced drag take surfaces on the carrier, and a pad of friction material for engagement with an adjacent face of the disc 1. A brake actuating device 6 mounted in the caliper is adapted to urge the friction pad assembly 4 into engagement with the disc 1 and the reaction of disc pad assembly on the disc causes the caliper 3 to move bodily in the opposite direction with respect to the carrier 2, in turn to urge the friction pad assembly 5 into engagement with the opposite face of the disc 1.

The actuating device 6 comprises a rotary member 7 which is mounted in an opening in the caliper 2 between respective pairs of needle bearings 8 and 9 carried by a casing 10 and a cover 11 for the outer end of the casing. Two adjustable tappets 13 are housed in the casing 10 of the actuating device 6. Each of these tappets comprises a first internally threaded member 14, and a second externally threaded member 15. The tappets are disposed on opposite sides of a plane of symmetry E, parallel to and spaced from the same. The two second threaded members 15 are interconnected by a thin metal plate 16 so that they cannot be rotated, the metal plate at the same time serving as a heat shield between the members 15 and the friction pad assembly 4.

The rotary member 7 comprises two eccentrics 16 which are arranged in a terminal zone of the rotary member, acting through a roller body 17 onto a respective one of the first threaded members 14. The rotary member 7 is formed with a pair of journal pins 18 between the two eccentrics and the journal pins are supported in a depression 19 at the inner side of the cover 11 through an outer ring of the needle bearings 8. Both first threaded members 14 are connected to the rotary member 7 by a gear connection which comprises an angle drive and a coupling arrangement 20 also the angle drive is formed by meshing bevel teeth 22 and 23. A pinion 24 engages directly with external teeth 25 on the adjacent first threaded member 14 and only then does an intermediate gear 26 follow. The intermediate gear meshes with the external teeth of both first threaded members 14.

The pinion 24 is formed with an inner hexagon 50 which co-operates with a complementary hexagonal formation 51 on a return adjuster shaft 52.

A first sleeve 27 surrounds the shaft 52 and discs 28 between the coupling arrangement 20 and a second sleeve 29 provide a drive connection therebetween.

On actuation of the brake, rotation of the rotary member 7 is converted by the angle drive formed by the two bevel teeth 22 and 23 into rotation of the first leaf 27 supported on the shaft 52 of the coupling arrangement 20. Once a rotational clearance has been overcome between the disc 28 and the second sleeve 29, a torque will act on the second sleeve 29, through a wrap spring 30, onto the pinion 24, and finally onto the first threaded member 14 through the intermediate gear 26 and the external teeth 25.

The threaded member 14 will not rotate, however, if a brake relief clearance, has been overcome by the above mentioned rotational clearance so the two brake pad assemblies 4 and 5 have engaged the brake disc 1 which consequently transmits reactive force, in correspondence with the actuating force, to the two eccentrics 16 through a tappet formed by the two threaded members 14 and 15. The friction occurring in the readjustment thread pair 13 on that occasion is greater than the torque which the coupling 21 can transmit.

If the rotational clearance between the discs 28 and the second sleeve 29 is overcome upon actuation of the brake, and the brake pad assemblies 4,5 do not reach the brake disc to give rise to a corresponding reactive force, rotation of the first sleeve 27 will be transmitted through the stack of discs 28 to the second sleeve 29 and on through the wrap spring 30 to the pinion 24 and finally to the first threaded member 14 which consequently will be turned in the sense that the tappet is presents together with second threaded member 15 extends in length.

On release of the brake, the rotational movement of the rotary member 8, which is now in the opposite sense, is transmitted to the first leaf 27 but not further onto the pinion 24 because, in this direction of rotation, the wrap spring 30 opens and thus prevents the pinion 24 from accompanying the rotational movement.

Wear sensing means in the form of a linear potentiometer wear sensor 60 is housed in an opening 61 in the caliper 3 and is accessible through a complementary opening 62 in the cover 11. A pinion 63 at the inner end of the potentiometer meshes with the pinion 24. The axis of the potentiometer 60 is parallel with that of the shaft 52 and it is accommodated in the caliper 3 within the overall actual length of the brake. As illustrated the potentiometer 60 is housed within a cartridge 64.

Electrical terminals 66 projecting from the cartridge 64 can be connected to a cable.

The potentiometer sensor 60 is illustrated in detail in Figure 2 of the accompanying drawings. As illustrated the cartridge 64 comprises a hollow body 70 which is rotatably mounted in the cover 11. The body 70 houses an axially extending track 71 with which co-operates a wiper member or arm 72 rotatably mounted on a lead screw 73 and of which the free end carries the pinion 63. For normal brake lining wear the pinion 60 turns the lead screw 73 in a direction so as to move the wiper member 72 relatively away from the pinion 63 along the resistive track 71. Wear increases the effective length of the resistive track 71 is shortened so that the output voltage of the sensor, when connected in a suitable electrical circuit, increases. In addition to the rotation of the lead screw 73, a rotary movement is applied to the potentiometer housing 70 from a peg or pin drive 75 taken from a part of the adjuster mechanism which normally rotates on each stroke of the adjuster. A peg can conveniently be used since the total angle of rotation is small. As the brake is applied the peg 75 imparts a rotary movement to the body 70 of the potentiometer in such a direction that the wiper member 72, supported on the lead screw 71, is moved in a direction relatively towards the pinion 63, namely opposite to the direction of movement for brake lining wear.

As the linings progressively wear the wiper member 72 moves progressively along the track 71 by progressively increasing distance away from the pinion 63. As each brake stroke occurs the wiper member 72 moves a short distance relatively towards the pinion 63 and returned to the original position as the brakes are released.

Should the wiper member 72 not return to its original position as the brakes are released this will provide an indication that the adjuster assembly in itself is malfunctioning or slipping.

Voltage step change as the adjuster assembly increments to the next base value can be sensed installed in an electronic controller. Therefore if the previous voltage reference for a previous adjuster position is also stored and then subtracted from the current adjuster position voltage, with brakes off, then the voltage change per adjustment cycle can be checked. This corresponds to a measurement of the adjuster movement and this provided a method checking that the adjuster is moving to take up any excess clearance when it is suppose to. Also if the voltage change when the pegs are actuated causes the voltage to drop below the original, or previously stored, value this is a signal that the clearance in the brake is in excess of that at which the adjuster should have operated to take up such excess. This therefore provides the indication that the adjuster assembly is malfunctioning.

In a modification of the construction described above the peg or drive pin 75 acts between the adjuster mechanism and the body 70 through a clearance similar to the braking clearances. The clearances define a degree of lost-motion which is taken up before the mechanism acts on the body. Thus the wiper member 72 will be moved towards the pinion 73 only after the brake clearances have been taken up, and in response to deflection of the components of the brake which occur after the pad assemblies 4 and 5 have engaged with the disc 1.

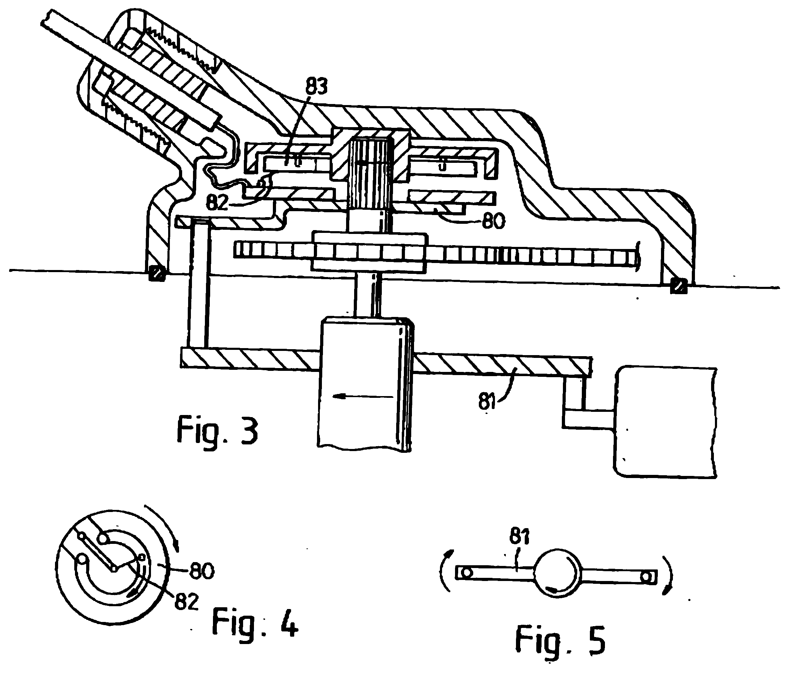

As illustrated in Figures 3,4 and 5 5 of the drawings the potentiometer comprises a rotary potentiometer comprises an electrical track 80 adapted to rotate with actuator stroke applied to it through a rotatably link arm 81, and a wiper member 82 which is carried by a gear drive 83 and rotates with respect to the track upon rotation of the adjuster assembly to compensate for wear of the friction linings.

Thus, as in the previous embodiment, the wiper 82 moves angularly with respect to the track in response to operation of the adjuster assembly, and the track, itself, is rotated in opposite direction from a data position, and is returned to the data position, upon each brake application release.

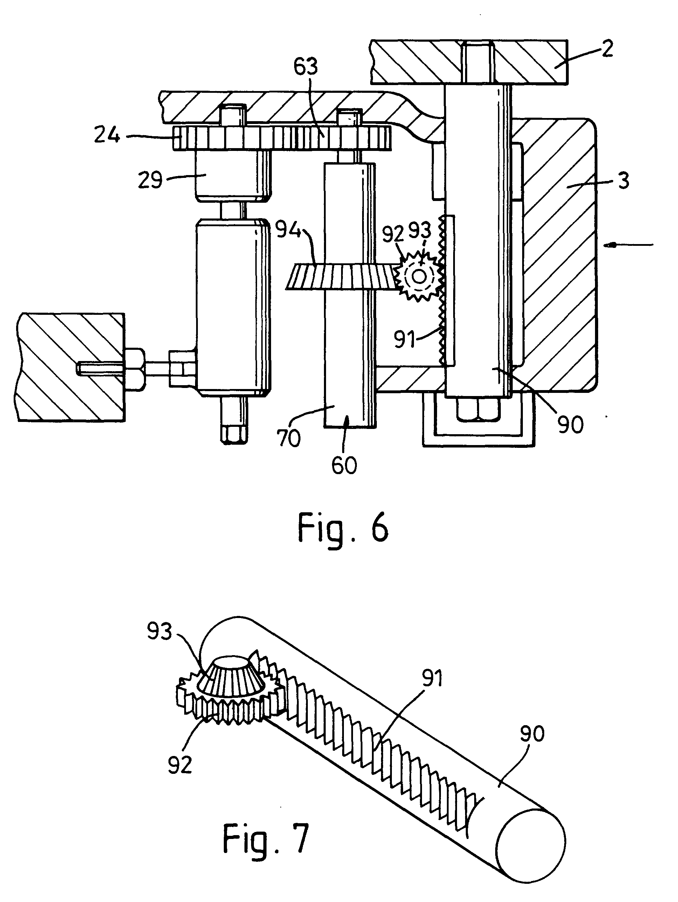

In the construction illustrated in Figures 6 and 7 movement of the caliper 3 in the application of the brake is transmitted to the body 70 of the linear potentiometer 60 with respect to the slide pin 19 on which the caliper is guided for axial sliding movement with respect to the brake carrier member 2. As illustrated the pin 19 is formed to the local toothed rack formation 91 with which a pinion 92 meshes. The pinion 92 is combined with a bevelled gear 93 in turn meshing with a bevelled gear 94 fast with the housing 70. Thus axial movement of the caliper 3 with respect to the pin 90 cause the body 70 of the potentiometer to rotate in a corresponding direction through the rack 91, the pinion 92, and the bevelled gears 94.

The construction and operation of the embodiment of Figures 6 and 7 is otherwise the same as that of Figures 1 and 2 and corresponding reference numerals have been applied to corresponding parts.

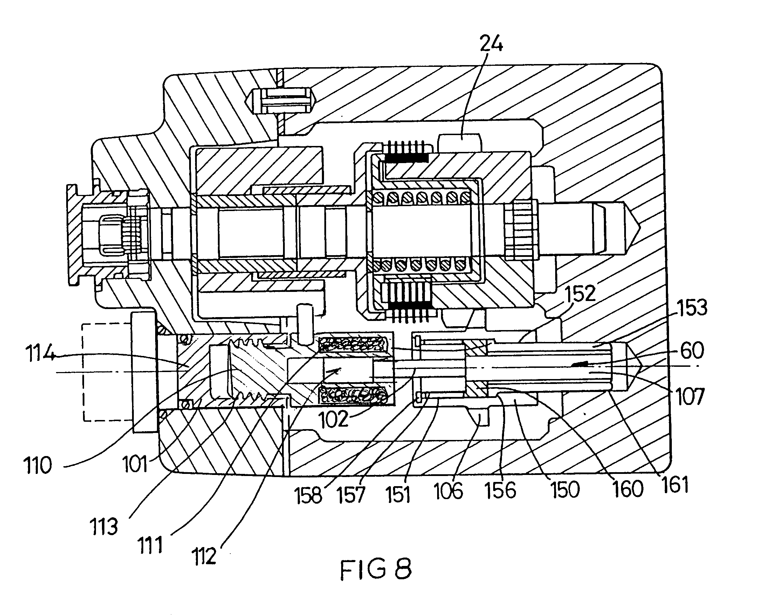

In the construction illustrated in Figure 8 of the accompanying drawings, a pinion 106 is carried by an axially extending hub 150 which has a stepped bore including a bore portion 151 of larger diameter, and a bore portion 152 of smaller diameter. The pinion 106 and the hub 150 may comprise a one-piece plastics assembly. An elongate bush 153 guided to slide in the bore portion 152 has an enlarged head 154 slideably received in the larger bore potion 151. The head is normally held in abutment with a step 156 at the change in diameter between the two bore portions by means of a compression spring 157 which acts between an abutment 158 at the outer end of the hub 150, and a nut 160 guided for axial sliding movement in the bore portion 151 in which it is keyed against rotation. Conveniently the bore portion 151 and the nut 160 are of complementary hexagonal cross-section. The lead screw 107 for operating a sensor 101 of an inductive type through a rod 102 is screwed through the nut 160 and is held against rotation in the bush 153. For example a keyed or similar engagement may be provided between the lead screw 107 and the bush 153.

When assembling the sensor, the bush 153 is pressed into bore 161 in the brake housing to an extent that when the spring 157 is fully extended and the pinion 106 is in engagement with the gear wheel 24, the hub 160 is spaced from the brake housing by a distance which permits the pinion 106 to be moved through the brake housing sufficiently far to allow disengagement of the pinion 106 from the gear wheel 24.

The sensor 101 comprises a body 110 containing active coils 111 arranged to be displaced by an "on" and "off" stroke of the brake using the same input as that described above with reference to the brake of Figure 1 of the accompanying drawings. The coils 111 surround an armature 112.

The body 110 has a screw-threaded engagement 113 in a fixed plug 114 so that the rotary input causes an axial or linear displacement of the coils 111 with respect to the armature 112 through the use of a transmission mechanism comprising the threaded engagement 113 between the body 110 and the plug 114.

The sensor 101 is therefore able to measure both stroke and adjustment.

## Claims

1. A brake condition monitoring means for a vehicle brake in which a friction lining (4,5) has an operative face adapted to be applied to a rotor (1), the means comprising a displacement sensor (60), which in use is incorporated in a brake to monitor brake lining wear and stroke of a actuator (6) for applying a brake lining to a brake rotor, and the sensor comprises a first sensor element (72) which is movable in a first direction in response to wear of the brake lining, and in a second and opposite direction in response to increased stroke of the actuator, characterised in that the displacement sensor comprises an electrically resistive track (71), and a wiper arm (72) movable with respect to the track in response to wear of the lining and increased stroke of the actuator, in which the wiper arm (72) is rotatably driven from an adjuster (13,24) as the effective length of the adjuster increases to compensate for wear of the friction lining, and rotary movement is applied to a part of a potentiometer (60) for moving it angularly in one direction in response to displacement of the brake in a brake-applying direction, whereby in use, as the brake is applied, a rotary movement is applied to the potentiometer in such a direction that relative movement of the wiper arm (72) takes place in a second direction relatively opposite to the movement of the wiper arm in a first direction in response to lining wear.

2. Monitoring means according to claim 1, in which transmission means between the brake and the potentiometer (60) include a lost-motion connection so constructed and arranged that the rotary movement is applied to the potentiometer only after brake clearances have been taken up, whereby the wiper arm (72) is moved in the second direction only in response to deflection of components of the brake after the brake clearances have been taken up.

3. Monitoring means according to claim 1 or claim 2, in which the potentiometer (60) is of linear construction arranged in the brake with its axis at any convenient attitude which respect to the axis of the adjuster.

4. Monitoring means according to any preceding claim, in which the potentiometer is of rotary construction.

5. Monitoring means according to claim 3, in which the wiper arm (72) is driven from the adjuster to compensate for wear of the friction linings and rotary movement is applied to a housing of the potentiometer to move it angularly.

6. Monitoring means according to claim 5, in which the said rotary movement is applied in response to angular movement of another part of the adjuster mechanism which normally rotates with the actuator stroke.

7. Monitoring means according to claim 5, in which the said rotary movement is applied to the housing in response to axial movement of the caliper of the brake with respect to guide means.

8. Monitoring means according to claim 7, in which the said movement is transmitted through a rack and pinion mechanism (91,92) and bevel gearing (94).

9. Monitoring means according to claim 4, in which an electrical track (80) is adjusted to rotate with actuator stroke, and a wiper member (82) rotates with respect to the track upon rotation of the adjuster assembly to compensate for wear of the friction linings.

10. Monitoring means according to claim 1, in which the displacement sensor (60) comprises a sensor (101) of the inductive type, and a sensor body (110) containing active coils (111) is arranged to be displaced by the "on" and "off" stroke of the brake.

11. Monitoring means according to claim 10, in which a rotary input causes an axial or linear displacement of the coils (111) with respect to an armature (112) which is substantially in proportion to the stroke of the brake through the use of a transmission mechanism (113) between the sensor body (110) and a fixed plug.

12. Monitoring means according to claim 11, in which the transmission mechanism (113) comprises a screw-threaded engagement.

13. A vehicle brake comprising a friction lining (4,5) having an operative face adapted to be applied to a rotor in which the brake incorporates brake lining wear monitoring means according to any of the preceding claims.

## Patentansprüche

1. Bremszustands-Überwachungseinrichtung für eine Fahrzeugbremse, bei der ein Reibbelag (4, 5) eine Wirkfläche hat, die an ein rotierendes Teil (1) angelegt werden kann, wobei die Einrichtung einen Verschiebungssensor (60) aufweist, der in Gebrauch in einer Bremse eingebaut ist, um den Verschleiß eines Bremsbelags und den Hub eines Stellorgans (6) zum Andrücken des Bremsbelags an ein rotierendes Teil der Bremse zu überwachen, und wobei der Sensor ein erstes Sensorelement (72) aufweist, das als Folge von Verschleiß des Bremsbelags in eine erste Richtung bewegbar ist und als Folge eines erhöhten Hubs des Stellorgans in eine zweite, entgegengesetzte Richtung bewegbar ist, dadurch gekennzeichnet, daß der Verschiebungssensor eine widerstandsbehaftete Leiterbahn (71) sowie einen Schleifarm (72) aufweist, der als Folge des Verschleißes des Belags und des erhöhten Hubs des Stellorgans in Bezug auf die Leiterbahn verschiebbar ist, wobei der Schleifarm (72) von einem Einstellglied (13, 24) in Drehung versetzt wird, wenn sich die wirksame Länge des Einstellglieds zum Ausgleich des Verschleißes des Reibbelags erhöht, und wobei auf ein Teil eines Potentiometers (60) eine Drehbewegung übertragen wird, um es ansprechend auf eine Verschiebung der Bremse in deren Andrückrichtung einer Winkelbewegung zu unterwerfen, wodurch in Gebrauch beim Andrücken der Bremse eine Drehbewegung auf das Potentiometer in einer solchen Richtung übertragen wird, daß die Relativbewegung des Schleifarms (72) in einer zweiten Richtung erfolgt, die der Bewegung des Schleifarms in einer ersten Richtung als Folge des Verschleißes des Belags relativ entgegengerichtet ist.

2. Überwachungseinrichtung nach Anspruch 1, bei der die Übertragungsmittel zwischen der Bremse und dem Potentiometer (60) eine Verbindung mit Leergang umfassen, die so ausgebildet und angeordnet ist, daß die Drehbewegung erst auf das Potentiometer übertragen wird, wenn das Bremsspiel ausgeglichen ist, wodurch der Schleifarm (72) in die zweite Richtung nur als Folge einer Auslenkung von Bauteilen der Bremse nach dem Ausgleich des Bremsspiels bewegt wird.

3. Überwachungseinrichtung nach Anspruch 1 oder Anspruch 2, bei der das Potentiometer (60) einen linearen Aufbau hat und in der Bremse so angeordnet ist, daß seine Achse eine beliebige geeignete Stellung bezüglich der Achse des Verstellglieds einnimmt.

4. Überwachungseinrichtung nach einem der vorhergehenden Ansprüche, bei der das Potentiometer ein Drehpotentiometer ist.

5. Überwachungseinrichtung nach Anspruch 3, bei der der Schleifarm (72) vom Einstellglied zum Ausgleich des Verschleißes der Reibbeläge angetrieben wird und die Drehbewegung auf ein Gehäuse des Potentiometers übertragen wird, um es einer Winkelbewegung zu unterwerfen.

6. Überwachungseinrichtung nach Anspruch 5, bei der die Drehbewegung als Folge einer Winkelbewegung eines anderen Teils der Einstellgliedvorrichtung, die normalerweise mit dem Hub des Verstellglieds rotiert, übertragen wird.

7. Überwachungseinrichtung nach Anspruch 5, bei der die Drehbewegung auf das Gehäuse als Folge einer axialen Bewegung des Bremssattels der Bremse in Bezug auf Führungsmittel übertragen wird.

8. Überwachungseinrichtung nach Anspruch 7, bei der diese Bewegung über einen Zahnstangenmechanismus (91, 92) und ein Kegelradgetriebe (94) übertragen wird.

9. Überwachungseinrichtung nach Anspruch 4, bei der eine elektrische Leiterbahn (80) so eingestellt ist, daß sie mit dem Hub des Stellorgans rotiert, wobei sich ein Schleifelement (82) bei Drehung der Einstellgliedanordnung in Bezug auf die Bahn dreht, um den Verschleiß der Reibbeläge auszugleichen.

10. Überwachungseinrichtung nach Anspruch 1, bei der der Verschiebungssensor (60) einen Sensor (101) des induktiven Typs aufweist und ein aktive Spulen (111) enthaltender Sensorkörper (110) so angeordnet ist, daß er durch den "EIN"- und "AUS"-Hub der Bremse verschoben wird.

11. Überwachungseinrichtung nach Anspruch 10, bei der eine EingangsDrehbewegung eine axiale oder lineare Verschiebung der Spulen (111) in Bezug auf einen Anker (112) verursacht, die durch die Verwendung eines Übertragungsmechanismus (113) zwischen dem Sensorkörper (110) und einem ortsfesten Stopfen im wesentlichen proportional zum Bremshub ist.

12. Überwachungseinrichtung nach Anspruch 11, bei der die Übertragungseinrichtung (113) einen Gewindeeingriff umfaßt.

13. Fahrzeugbremse mit einem Reibbelag (4, 5), der eine Wirkfläche aufweist, die an ein rotierendes Teil angelegt werden kann, wobei die Bremse mit einer Bremsbelagverschleiß-Überwachungseinrichtung nach einem der vorhergehenden Ansprüche ausgestattet ist.

## Revendications

1. Dispositif de surveillance de l'état du frein pour un frein de véhicule dans lequel une garniture de friction (4, 5) possède une face travaillante adaptée pour être appliquée contre un rotor (1), le dispositif comprenant un capteur de déplacement (60), qui, en utilisation, est incorporé dans un frein pour surveiller l'usure de la garniture de frein et la course d'un actionneur (6) destiné à appliquer une garniture de frein contre un rotor de frein et, le capteur comprend un premier élément capteur (72) qui peut se déplacer dans un premier sens en réponse à l'usure de la garniture de frein et dans un deuxième sens, opposé, en réponse à un accroissement de la course de l'actionneur, caractérisé en ce que le capteur de déplacement comprend une piste électriquement résistive (71) et un bras de curseur (72) qui se déplace par rapport à la piste en réponse à l'usure de la garniture et à l'accroissement de la course de l'actionneur, dans lequel le bras de curseur (72) est entraîné en rotation par un organe d'ajustement (13, 24 ) au fur et à mesure que la longueur effective de l'organe de réglage s'accroît pour compenser l'usure de la garniture de friction, et le mouvement de rotation est appliqué à une partie d'un potentiomètre (60) pour la déplacer angulairement dans un sens en réponse au déplacement du frein dans un sens de serrage du frein, de sorte qu'en utilisation, lorsque le frein est serré, un mouvement rotatif est appliqué au potentiomètre dans un sens tel que le mouvement relatif du bras de curseur (72) se produise dans un deuxième sens relativement opposé au mouvement du bras de curseur dans un premier sens en réponse à l'usure de la garniture.

2. Dispositif de surveillance selon la revendication 1, dans lequel des moyens de transmission entre le frein et le potentiomètre (60) comprennent une liaison à course à vide construite et agencée de manière que le mouvement rotatif ne soit appliqué au potentiomètre qu'après que les jeux du frein ont été rattrapés, de sorte que le bras de curseur (72) ne se déplace dans le deuxième sens qu'en réponse à une flexion des composants du frein après que les jeux du frein ont été rattrapés.

3. Dispositif de surveillance selon la revendication 1 ou la revendication 2, dans lequel le potentiomètre (60) est d'une construction linéaire agencée dans le frein avec son axe dans une attitude appropriée par rapport à l'axe de l'organe d'ajustement.

4. Dispositif de surveillance selon une quelconque des revendications précédentes, dans lequel le potentiomètre est d'une construction rotative.

5. Dispositif de surveillance selon la revendication 3, dans lequel le bras de curseur (72) est entraîné par l'organe d'ajustement pour compenser l'usure des garnitures de friction, et un mouvement rotatif est appliqué à un boîtier du potentiomètre pour le déplacer angulairement.

6. Dispositif de surveillance selon la revendication 5, dans lequel le mouvement rotatif est appliqué en réponse à un mouvement angulaire d'une autre partie du mécanisme d'organe d'ajustement qui, normalement, tourne avec la course de l'actionneur.

7. Dispositif de surveillance selon la revendication 5, dans lequel ledit mouvement rotatif est appliqué au boîtier en réponse au mouvement axial de l'étrier du frein par rapport à des moyens de guidage.

8. Dispositif de surveillance selon la revendication 7, dans lequel ledit mouvement est transmis par l'intermédiaire d'un mécanisme à crémaillère et pignon (91, 92) et d'un engrenage conique (94).

9. Dispositif de surveillance selon la revendication 4, dans lequel une piste électrique (80) est ajustée pour tourner avec la course de l'actionneur et un élément curseur (82) tourne par rapport à la piste en réponse à la rotation de l'ensemble d'organe d'ajustement pour compenser l'usure des garnitures de friction.

10. Dispositif de surveillance selon la revendication 1, dans lequel le capteur de déplacement (60) comprend un capteur (101) du type inductif et un corps de capteur (110) contenant des bobines actives (111) est agencé pour être déplacé par la course de "serrage" et "desserrage" du frein.

11. Dispositif de surveillance selon la revendication 1, dans lequel une entrée rotative détermine un déplacement axial ou linéaire des bobines (111) par rapport à une armature (1l2) qui est sensiblement proportionnel à la course du frein à l'aide d'un mécanisme de transmission (113) entre le corps (110) du capteur et un bouchon fixe.

12. Dispositif de surveillance selon la revendication il, dans lequel le mécanisme de transmission (113) comprend un entraînement à pas de vis.

13. Frein de véhicule comprenant une garniture de friction (4, 5) ayant une face travaillante adaptée pour être appliquée contre un rotor, dans lequel le frein comprend un dispositif de surveillance de l'usure de la garniture de frein selon une quelconque des revendications précédentes.
